# FASCICULE DE BREVET EUROPEEN

(11) **EP 4 143 531 B1**
(45) Date de publication et mention de la délivrance du brevet: **03.01.2024**
(21) Numéro de dépôt: 21734889.5
(22) Date de dépôt: 28.05.2021
(51) Int. Cl.: G01N 3/56, G01M 13/04, G01M 13/02, F16C 17/24, F16C 23/04, F16C 17/02, F16C 33/10, F16C 41/00, F16C 43/02

(54) **DISPOSITIF DE GUIDAGE ET SYSTEME MECANIQUE COMPRENANT UN TEL DISPOSITIF**
FÜHRUNGSGERÄT UND MECHANISCHES SYSTEM EINSCHLIESSLICH EINES SOLCHEN GERÄTS
GUIDANCE DEVICE AND MECHANICAL SYSTEM INCLUDING SUCH A DEVICE

(30) Priorité: 30.06.2020 FR 2006879
(43) Date de publication de la demande: 08.03.2023
(73) Titulaire: HYDROMECANIQUE ET FROTTEMENT, 42160 Andrézieux-Bouthéon (FR)
(72) Inventeur: PAVALLIER, Pierrick, 42120 PERREUX (FR); PROST, Fabrice, 42000 SAINT-ETIENNE (FR)
(74) Mandataire: Cabinet Laurent & Charras
(86) Numéro de dépôt international: PCT/FR2021/050968
(87) Numéro de publication internationale: WO 2022/003263

(56) Documents cités:
- WO-A1-2020/041809
- DE-A1- 10 324 924
- US-A1- 2016 208 849

## Description

### Dispositif de guidage et système mécanique comprenant un tel dispositif

### Domaine technique

La présente invention concerne un dispositif de guidage, comprenant un composant métallique, un dispositif de détection et un dispositif de communication sans fil. Le domaine de l'invention est celui des dispositifs de guidage de pièces mobiles en contact de frottement par glissement.

### Art antérieur

Les dispositifs de guidage selon l'invention sont par exemple du type palier de guidage d'un axe, formant l'articulation d'une machine de travaux publics.

Les dispositifs montés sur des machines sont soumis à d'importantes sollicitations mécaniques. Des solutions de maintenance préventive et prédictive sont mises en place pour éviter les temps d'arrêts coûteux. Les documents de l'art antérieur pertinents pour l'invention sont les documents de brevet US 2016/208849 A1, DE 103 24 924 A1 et WO 2020/041809 A1.

### Exposé de l'invention

Le but de la présente invention est de proposer un dispositif de guidage permettant de mettre en oeuvre des opérations de maintenance prédictive.

A cet effet, l'invention a pour objet un dispositif de guidage selon la revendication 1.

Selon d'autres caractéristiques avantageuses de l'invention, prises isolément ou en combinaison :
- Le composant métallique est formé par une bague annulaire ayant une épaisseur radiale d'au moins 5 millimètres.
- Le composant métallique est formé par une bague annulaire ayant une épaisseur radiale d'au plus 15 millimètres.
- Le dispositif de guidage comprend un lubrifiant disposé sur la surface de frottement.
- La surface de frottement comprend des agencements faisant office de réserve de lubrifiant.
- Les agencements comprennent des cavités.
- Les agencements comprennent des rainures.
- Le système de détection est configuré pour la détection d'usure de la surface de frottement au moins sur une plage angulaire de 3° autour d'un axe central du composant métallique.
- Le système de détection est configuré pour la détection d'usure à 360° autour de l'axe central. Dans ce cas, l'opérateur effectuant le montage du dispositif de guidage et de son antagoniste n'a pas besoin de s'assurer que le système de détection est orienté correctement. En effet, la zone de charge maximale est forcément comprise dans la plage angulaire de détection. Le montage du dispositif est donc simplifié.
- Le système de détection comprend plusieurs capteurs, qui sont répartis autour de l'axe central et qui assurent la détection d'usure au moins sur une plage angulaire de 120°.
- Les capteurs assurent la détection d'usure sur plusieurs plages angulaires.
- Les capteurs sont répartis à 360° autour de l'axe central.
- Le système de détection comprend trois capteurs répartis à 120° autour de l'axe central.
- Le système de détection comprend quatre capteurs répartis à 90° autour de l'axe central.
- Le système de détection est configuré pour la détection d'usure sur une unique plage angulaire d'au moins 3°, c'est-à-dire selon une unique direction angulaire. Dans ce cas, l'opérateur effectuant le montage du dispositif de guidage et de son antagoniste doit s'assurer que le système de détection est orienté correctement, avec la plage angulaire de détection coïncidant avec la zone de charge maximale. Le dispositif est plus simple et moins coûteux, mais son montage demande plus de précision.
- Le système de détection est configuré pour la détection d'usure au moins sur une plage angulaire de 60, de préférence au moins 120°. Cela offre un bon compromis entre coût du dispositif, précision de la détection et précision du montage.
- Le système de détection comprend un unique capteur, qui assure la détection d'usure de la surface de frottement au moins sur une plage angulaire de 3°.
- Le système de détection comprend plusieurs capteurs assurant la détection d'usure au moins sur une plage angulaire de 60°. Les capteurs peuvent être disposés dans cette unique plage angulaire de 60°, ou sur une plage plus restreinte.
- Le ou les capteurs sont disposés exclusivement sur un bord longitudinal ou sur deux bords longitudinaux de la bague, chaque bord longitudinal étant défini sur au plus deux cinquièmes de la longueur de la bague annulaire.
- Chaque bord longitudinal est défini sur un tiers de la longueur de la bague annulaire.
- Le ou les capteurs sont disposés exclusivement sur un bord longitudinal de la bague.
- Le ou les capteurs sont répartis sur les deux bords longitudinaux de la bague.
- Le ou chaque capteur comprend au moins un fil conducteur ayant une extrémité agencée à une profondeur donnée sous la surface de frottement.
- Le système de détection est configuré pour détecter différents seuils d'usure de la surface de frottement.
- Le ou chaque capteur comprend plusieurs fils conducteurs ayant des extrémités agencées à différentes profondeurs sous la surface de frottement.
- Chaque capteur comprend des moyens d'indexation de sa position angulaire autour de l'axe central.
- Chaque capteur comprend des moyens d'indexation de sa position axiale le long de la surface de frottement.
- Chaque capteur comprend des moyens d'indexation de sa position radiale par rapport à la surface de frottement.
- Le ou chaque capteur comprend une enveloppe cylindrique logée dans un orifice traversant le composant métallique entre la surface de frottement et une surface opposée.
- Les moyens d'indexation radiale comprennent une collerette formée sur l'enveloppe cylindrique du capteur.
- Le système de détection comprend une bande conductrice qui est disposée dans une rainure annulaire formée sur une surface du composant métallique opposée à la surface de frottement et qui est connectée, d'une part, à chaque capteur et, d'autre part, au système de communication sans fil.
- Le système de communication comprend un émetteur configuré pour transmettre les informations à travers des composants métalliques présentant une épaisseur totale supérieure à 10 millimètres.

L'invention a également pour objet un système mécanique, caractérisé en ce qu'il comprend au moins un dispositif de guidage tel que décrit ci-dessus, et une pièce antagoniste montée en contact de frottement par glissement avec la surface de frottement, de préférence frottement par glissement avec oscillation.

### Description des figures

L'invention sera mieux comprise à la lecture de la description qui va suivre, donnée uniquement à titre d'exemple non limitatif et faite en référence aux dessins annexés sur lesquels :
[Fig. 1] est une vue en perspective d'un système mécanique conforme à l'invention, comprenant un dispositif de guidage et un axe monté dans le dispositif.
[Fig. 2] est une vue de côté du dispositif, selon une direction radiale.
[Fig. 3] est une coupe selon la ligne III-III à la figure 2.
[Fig. 4] est une coupe selon la ligne IV-IV à la figure 2.
[Fig. 5] est une vue à plus grande échelle du détail V à la figure 4.
[Fig. 6] est une coupe analogue à la figure 4, montrant une variante de dispositif de guidage, avec des capteurs sur les deux bords.

### Description détaillée de l'invention

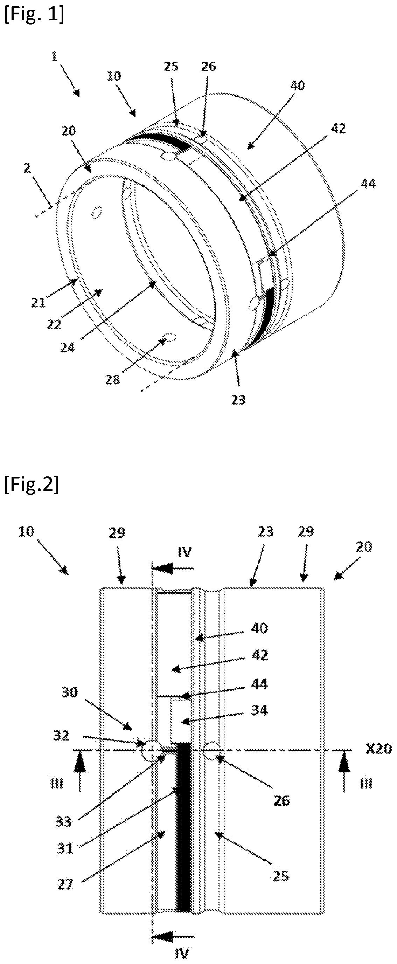

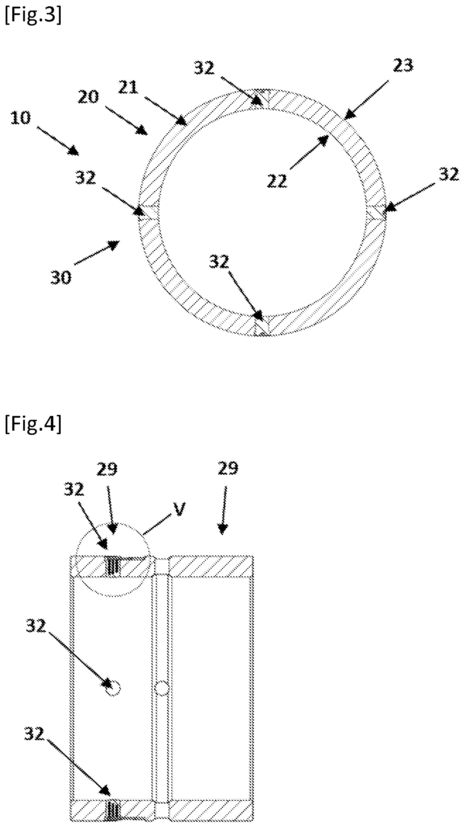

Sur les figures 1 à 5 est représenté un système mécanique (1) conforme à l'invention, comprend un dispositif de guidage (10) conforme à l'invention, et un axe (2) monté dans le dispositif (10). L'axe (2) est représenté par deux traits en pointillés dans un but de simplification. Le dispositif (10) est conçu pour le guidage de l'axe (2) en contact de frottement par glissement, en particulier glissement avec oscillation.

Le mouvement d'oscillation correspondant à une rotation incomplète autour de l'axe central, en va-et-vient. Soit l'axe (2) oscille dans le dispositif (10), soit le dispositif (10) oscille autour de l'axe (2). Dans les deux cas, les charges exercées sur le dispositif (10) définissent une zone de charge maximale, correspondant à une position angulaire particulière.

A l'interface de frottement entre le dispositif (10) et l'axe (2) est disposé un lubrifiant, de préférence de la graisse.

Le dispositif (10) comprend un composant de frottement métallique (20), un système de détection (30) et un système de communication sans fil (40).

Le composant métallique (20) est formé par une bague annulaire (21), munie d'une surface interne (22) et d'une surface externe (23) de profils cylindriques. La surface interne (22) constitue une surface de frottement destinée à recevoir l'axe (2) en contact de frottement par glissement. Avantageusement, la surface (22) peut comprendre des agencements faisant office de réserve de lubrifiant. Les agencements peuvent comprendre des cavités, des rainures et/ou d'autres types d'agencements.

Les surfaces (22, 23) comportent des rainures annulaires (24, 25) en partie centrale, reliées par des orifices (26) traversant la bague (21). Les éléments (24, 25, 26) constituent des moyens de lubrification de la surface (22). En variante, par exemple en cas de graissage par l'axe ou par le côté, la bague (21) peut être dépourvue d'éléments (24, 25, 26). Les moyens de lubrification de la surface (22) peuvent être de tout type adapté à l'application visée.

La surface (23) comporte une rainure annulaire (27) formée sur un côté de la rainure (25). Les surfaces (22, 23) sont reliées par des orifices (28) traversant la bague (21) en bordure de la rainure (27). Les éléments (27, 28) constituent des moyens de réception du système de détection (30). En variante, si la bague (21) est dépourvue d'éléments (24, 25, 26), les éléments (27, 28) peuvent être disposés en partie centrale. Selon une autre variante, la rainure (27) peut être disposée en partie centrale, tandis que les orifices (28) sont disposés sur un bord (29).

Suivant la direction longitudinale de la bague (21), on distingue une partie centrale et deux bords longitudinaux (29) encadrant la partie centrale. Chaque bord longitudinal (29) est défini sur au plus deux cinquièmes de la longueur de la bague (21). De préférence, chaque bord longitudinal (29) est défini sur un tiers de la longueur de la bague (21).

L'épaisseur de la bague (21) dépend de l'application visée. La bague (21) peut avoir une épaisseur comprise entre 5 et 15 millimètres, ou au-delà. Cette épaisseur est définie sur la portée fonctionnelle de la surface de frottement (22), en excluant un épaulement éventuel formé sur un bord (29).

Le système de détection (30) est configuré pour détecter l'usure de la surface de frottement (22). En alternative, le système de détection (30) pourrait être configuré pour détecter le jeu entre la surface de frottement (22) et la surface de l'axe (2).

Le système de détection (30) comprend une bande conductrice (31), plusieurs capteurs (32) connectés à la bande (31) via des fils conducteurs (33), et un connecteur (34) conçu pour connecter le système (30) au système (40). La bande (31) est constituée d'une nappe de fils conducteurs, intégrant les fils (33). Le connecteur (34) peut comprendre une puce électronique, configurée pour transformer l'information sur la perte de courant en information sur la profondeur d'usure. En alternative, le connecteur (34) peut comprendre de simples fils appartenant à la bande (31).

La bande conductrice (31) est disposée dans la rainure annulaire (27) formée sur la surface externe (23) du composant métallique (20). La bande conductrice (31) est connectée, d'une part, à chaque capteur (32) via les fils conducteurs (33) et, d'autre part, au système de communication sans fil (40) via le connecteur (34).

Sur l'exemple des figures, le système de détection (30) comprend quatre capteurs (32) répartis à 90° autour de l'axe central (X20) du composant (20). Ainsi, le système de détection (30) assure la détection d'usure sur une plage angulaire de 360° autour de l'axe central (X20).

Avantageusement, les capteurs (32) sont disposés exclusivement sur un bord longitudinal (29) de la bague (21), sans déborder en partie centrale. En effet, lorsque le système mécanique (1) est en service, les contraintes mécaniques sont généralement concentrées sur les bords (29) de la bague (21). Disposer les capteurs (32) sur un bord (29) plutôt qu'en partie centrale permet d'améliorer la détection d'usure et les chances de mettre en oeuvre une opération de maintenance prédictive avant un dysfonctionnement critique du système (1).

Chaque capteur (32) comprend plusieurs fils conducteurs (35, 36, 37), ayant chacun une extrémité agencée à une profondeur donnée sous la surface de frottement (22). L'usure du fil conducteur (35, 36, 37) est fonction de l'usure de la surface (22). Les extrémités des fils conducteurs (35, 36, 37) sont agencées à différentes profondeurs sous la surface de frottement (22). L'usure successive des fils conducteurs (35, 36, 37) est liée à l'usure progressive de la surface de frottement (22), selon différents seuils. Ainsi, le système de détection (30) est configuré pour détecter différents seuils d'usure de la surface de frottement (22).

Chaque capteur (32) comprend une enveloppe cylindrique (38) logée dans un orifice (28) traversant le composant métallique (20) entre la surface de frottement (22) et la surface externe (23). Cette enveloppe (38) constitue un moyen d'indexation de la position angulaire et axiale du capteur (32). D'autres solutions sont envisageables pour former des moyens d'indexation angulaire et/ou axiale. L'enveloppe (38) logée dans un orifice (28) a l'avantage d'être une solution simple à mettre en oeuvre.

De préférence, chaque capteur (32) comprend des moyens d'indexation de sa position radiale par rapport à la surface de frottement (22). Par exemple, les moyens d'indexation radiale peuvent comprendre une collerette (39) formée sur l'enveloppe cylindrique (38) du capteur (32). D'autres solutions sont envisageables pour former les moyens d'indexation radiale, qui permettent de s'assurer que les fils (35, 36, 37) sont positionnés à la bonne profondeur par rapport à la surface (22).

Le système de communication sans fil (40) est connecté au système de détection (30) et configuré pour transmettre des informations relatives à l'usure ou au jeu vers l'extérieur du dispositif de guidage (10).

Le système (40) comprend un émetteur (42) envoyant des signaux radio dans toutes les directions. Si le dispositif (40) est disposé dans un environnement fermé, l'émetteur (42) peut être configuré pour transmettre les informations à travers des composants métalliques présentant une épaisseur totale supérieure à 10 millimètres. En pratique, les signaux peuvent être transmis suivant une direction axiale à un lecteur externe disposé à proximité de la bague (21), à travers les pièces de son environnement.

Selon un mode de réalisation particulier, l'émetteur (42) peut être constitué par une puce RFID. D'autres technologies peuvent être utilisées sans sortir du cadre de l'invention.

En outre, le système de communication (40) peut comprendre une source d'énergie permettant d'alimenter le système de détection (30).

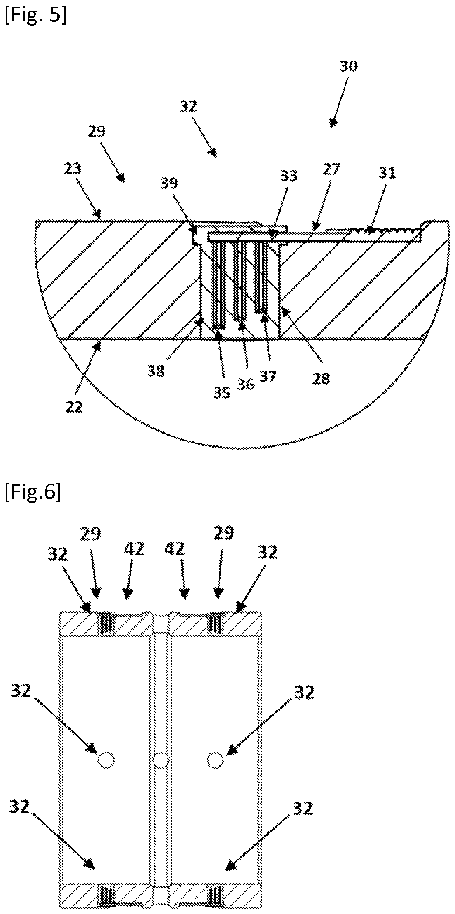

La figure 6 montre une variante de dispositif de guidage (10), comprenant des capteurs (32) disposés sur les deux bords longitudinaux (29), mais pas en partie centrale. Le dispositif (10) peut avantageusement être monté dans les deux sens, sans que l'opérateur soit forcé de faire attention à son orientation. Cette configuration est également utile en cas d'asymétrie dans la répartition des contraintes mécaniques entre les deux bords (29). De préférence, le système de communication (40) comporte deux émetteurs (42), un sur chaque côté. Cela facilite la liaison entre capteur (32) et émetteurs (42), et permet de s'assurer qu'un émetteur (42) est toujours proche du lecteur externe disposé à proximité du dispositif (10).

Par ailleurs, le dispositif (10) peut être conformé différemment des figures 1 à 6 sans sortir du cadre de l'invention, qui est définie par les revendications.

## Revendications

1. Dispositif de guidage (10), comprenant :
- un composant métallique (20) muni d'une surface de frottement (22) destinée à recevoir une pièce antagoniste (2) en contact de frottement par glissement ;
- un système de détection (30) d'usure de la surface de frottement (22) ou d'un jeu entre la surface de frottement (22) et la pièce antagoniste (2), le système de détection (30) comprenant un ou plusieurs capteurs (32) ; et
- un système de communication sans fil (40) connecté au système de détection (30) et configuré pour transmettre des informations relatives à l'usure ou au jeu vers l'extérieur du dispositif de guidage (10)
***caractérisé en* ce *que*** le ou chaque capteur (32) comprend au moins un fil conducteur (35, 36, 37) ayant une extrémité agencée à une profondeur donnée sous la surface de frottement (22), l'usure du fil conducteur (35, 36, 37) est fonction de l'usure de la surface (22), **et *en ce que*** le ou chaque capteur (32) comprend une enveloppe cylindrique (38) logée dans un orifice (28) traversant le composant métallique (20) entre la surface de frottement (22) et la surface externe (23).

2. Dispositif de guidage (10) selon la revendication 1, **caractérisé en ce qu'**il comprend un lubrifiant disposé sur la surface de frottement (22).

3. Dispositif de guidage (10) selon l'une quelconque des revendications précédentes, **caractérisé en ce que** la surface de frottement (22) comprend des agencements faisant office de réserve de lubrifiant.

4. Dispositif de guidage (10) selon l'une quelconque des revendications précédentes, **caractérisé en ce que** le système de détection (30) est configuré pour la détection d'usure de la surface de frottement (22) sur une plage angulaire d'au moins 3° autour d'un axe central (X20) du composant métallique (20).

5. Dispositif de guidage (10) selon la revendication 4, **caractérisé en ce que** le système de détection (30) comprend un unique capteur (32), qui assure la détection d'usure de la surface de frottement (22) sur une plage angulaire d'au moins 3°.

6. Dispositif de guidage (10) selon la revendication 4, **caractérisé en ce que** le système de détection (30) comprend plusieurs capteurs (32), qui sont répartis autour de l'axe central (X20) du composant métallique (20) et assurent la détection d'usure au moins sur une plage angulaire de 60°, de préférence sur une plage angulaire de 360°.

7. Dispositif de guidage (10) selon l'une quelconque des revendications précédentes, **caractérisé en ce que** le ou les capteurs (32) sont disposés exclusivement sur un bord longitudinal (29) ou sur deux bords longitudinaux (29) du composant métallique (20), chaque bord longitudinal (29) étant défini sur au plus deux cinquième de la longueur de la bague annulaire (21).

8. Dispositif de guidage (10) selon l'une quelconque des revendications précédentes, **caractérisé en ce que** le composant métallique (20) est formé par une bague annulaire (21) ayant une épaisseur radiale d'au moins 5 millimètres.

9. Dispositif de guidage (10) selon l'une quelconque des revendications précédentes, **caractérisé en ce que** le composant métallique (20) est formé par une bague annulaire (21) ayant une épaisseur radiale d'au plus 15 millimètres.

10. Système mécanique (1), **caractérisé en ce qu'**il comprend au moins un dispositif de guidage (10) selon l'une des revendications 1 à 9, et une pièce antagoniste (2) montée en contact de frottement par glissement avec la surface de frottement (22), de préférence frottement par glissement avec oscillation.

## Patentansprüche

1. Führungsvorrichtung (10), umfassend:
- ein Metallbauteil (20) versehen mit einer Reibungsfläche (22), bestimmt zur Aufnahme eines Gegenstücks (2) in reibschlüssigem Kontakt;
- ein System zur Erkennung (30) der Abnutzung der Reibungsfläche (22) oder eines Spiels zwischen der Reibungsfläche (22) und dem Gegenstück (2), das Detektionssystem (30) umfasst dabei einen oder mehrere Fühler (32); und
- ein drahtloses Kommunikationssystem (40), verbunden mit dem Detektionssystem (30) und dazu konfiguriert, Informationen zur Abnutzung oder dem Spiel nach außerhalb der Führungsvorrichtung (10) zu übertragen
***dadurch gekennzeichnet, dass*** der oder jeder Fühler (32) mehrere leitenden Drähte (35, 36, 37) umfasst, bei denen die Endstücke in verschiedenen Tiefen unter der Reibungsfläche (22), angeordnet sind, die Abnutzung des Leiters (35, 36, 37) entspricht der Abnutzung der Oberfläche (22) ***und dadurch dass*** der oder jeder Fühler (32) eine zylinderförmige Hülle (38) umfasst, untergebracht in einer Öffnung (28), die durch das Metallbauteil (20) zwischen der Reibungsfläche (22) und der Außenfläche (23) hindurchführt.

2. Führungsvorrichtung (10) nach Anspruch 1, **dadurch gekennzeichnet, dass** sie ein Schmiermittel umfasst, das auf der Reibungsfläche (22) vorgesehen ist.

3. Führungsvorrichtung (10) nach irgendeinem der vorstehenden Ansprüche, **dadurch gekennzeichnet, dass** die Reibungsfläche (22) Einrichtungen enthält, die als Schmiermittelreserve dienen.

4. Führungsvorrichtung (10) nach irgendeinem der vorstehenden Ansprüche, **dadurch gekennzeichnet, dass** das Detektionssystem (30) konfiguriert ist zur Erkennung der Abnutzung der Reibungsfläche (22) in einem Winkelbereich von mindestens 3° um eine zentrale Achse (X20) des Metallbauteils (20) herum.

5. Führungsvorrichtung (10) nach Anspruch 4, **dadurch gekennzeichnet, dass** das Detektionssystem (30) einen einzigen Fühler (32) umfasst, der die Erkennung der Abnutzung der Reibungsfläche (22) in einem Winkelbereich von mindestens 3° gewährleistet.

6. Führungsvorrichtung (10) nach Anspruch 4, **dadurch gekennzeichnet, dass** das Detektionssystem (30) mehrere Fühler (32) enthält, die um die zentrale Achse (X20) des Metallbauteils (20) herum angeordnet sind und die Erkennung der Abnutzung in mindestens einem Winkelbereich von 60°, vorzugsweise in einem Winkelbereich von 360° gewährleisten.

7. Führungsvorrichtung (10) nach irgendeinem der vorstehenden Ansprüche, **dadurch gekennzeichnet, dass** der oder die Fühler (32) ausschließlich über einen Längsrand (29) oder über zwei Längsränder (29) des Rings angeordnet sind, jeder Längsrand (29) ist definiert über höchstens zwei Fünftel der Länge des Rings (21).

8. Führungsvorrichtung (10) nach irgendeinem der vorstehenden Ansprüche, **dadurch gekennzeichnet, dass** das Metallbauteil (20) aus einem Ring (21) mit einer radialen Dicke von mindestens 5 Millimetern besteht.

9. Führungsvorrichtung (10) nach irgendeinem der vorstehenden Ansprüche, **dadurch gekennzeichnet, dass** das Metallbauteil (20) aus einem Ring (21) mit einer radialen Dicke von höchstens 5 Millimetern besteht.

10. Mechanisches System (1), **dadurch gekennzeichnet, dass** es mindestens eine Führungsvorrichtung (10) enthält, nach einem der Ansprüche 1 bis 9 sowie ein Gegenstück (2), montiert in reibschlüssigem Kontakt mit der Reibungsfläche (22), vorzugsweise reibschlüssig mit Schwingung.

## Claims

1. A guide device (10) comprising:
- a metal component (20) provided with a friction surface (22) intended to receive a mating part (2) in sliding frictional contact;
- a detection system (30) of a wear of the friction surface (22) or of a clearance between the friction surface (22) and the mating part (2), the detection system (30) comprising one or more sensors (32); and
- a wireless communication system (40) connected to the detection system (30) and configured to transmit information relating to wear or clearance out of the guide device (10) **characterized in that** the or each sensor (32) includes at least one conductive wire (35, 36, 37) having one end arranged at a given depth below the friction surface (22), the wear of the conductive wire (35, 36, 37) is a function of the wear of the surface (22), and **in that** the or each sensor (32) includes a cylindrical sleeve (38) housed in an aperture (28) passing through the metal component (20) between the friction surface (22) and the external surface (23).

2. The guide device (10) as claimed in claim 1, **characterized in that** it comprises a lubricant disposed on the friction surface (22).

3. The guide device (10) as claimed in any one of the preceding claims, **characterized in that** the friction surface (22) comprises workings acting as a reservoir for lubricant.

4. The guide device (10) as claimed in any one of the preceding claims, **characterized in that** the detection system (30) is configured for the detection of wear of the friction surface (22) over an angular range of at least 3° about a central axis (X20) of the metal component (20).

5. The guide device (10) as claimed in claim 4, **characterized in that** the detection system (30) comprises a single sensor (32) which ensures the detection of wear of the friction surface (22) over an angular range of at least 3°.

6. The guide device (10) as claimed in claim 4, **characterized in that** the detection system (30) comprises a plurality of sensors (32) which are distributed about the central axis (X20) of the metal component (20) and which ensure the detection of wear over at least an angular range of 60°, preferably over an angular range of 360°.

7. The guide device (10) as claimed in any one of the preceding claims, **characterized in that** the sensor or sensors (32) are disposed exclusively on one longitudinal side (29) or on two longitudinal sides (29) of the metal component (20), each longitudinal side (29) being defined over at most two fifths of the length of the annular bush (21).

8. The guide device (10) as claimed in any one of the preceding claims, **characterized in that** the metal component (20) is formed by an annular bush (21) having a radial thickness of at least 5 millimetres.

9. The guide device (10) as claimed in any one of the preceding claims, **characterized in that** the metal component (20) is formed by an annular bush (21) having a radial thickness of at most 15 millimetres.

10. A mechanical system (1), **characterized in that** it comprises at least one guide device (10) as claimed in one of claims 1 to 9, and a mating part (2) mounted in sliding frictional contact with the friction surface (22), preferably in sliding frictional contact with oscillation.
